## Europäisches Patentamt
## European Patent Office
## Office européen des brevets

(11) Veröffentlichungsnummer: **0 166 905**
**A1**

# (12) EUROPÄISCHE PATENTANMELDUNG

(21) Anmeldenummer: 85105342.1

(22) Anmeldetag: 02.05.85

(51) Int. Cl.⁴: **B 62 L 1/16**
B 62 L 3/00, B 60 T 11/16

(30) Priorität. 07.05.84 DE 3416726

(43) Veröffentlichungstag der Anmeldung:
08.01.86 Patentblatt 86/2

(84) Benannte Vertragsstaaten:
AT BE CH DE FR GB IT LI LU NL SE

(71) Anmelder· Süle, Sandor
Hüttenlebenweg 42
CH-8240 Thayngen(CH)

(72) Erfinder: Süle, Sandor
Hüttenlebenweg 42
CH-8240 Thayngen(CH)

(74) Vertreter: Hiebsch, Gerhard F., Dipl.-Ing.
Erzbergerstrasse 5A Postfach 464
D-7700 Singen 1(DE)

(54) **Vorrichtung zum Bremsen eines Zweirades, insbesondere Fahrradbremse.**

(57) Eine Vorrichtung zum Bremsen eines Zweirades, insbesondere eine Fahrradbremse, mit beidseits einer Felge angeordneten Bremsbacken, die an angelenkten Enden eines etwa U-förmigen, über der Felge festliegenden Halters vorgesehen und gegen die Kraft einer Feder oder eines entsprechenden Kraftspeichers durch den Druck eines Strömungsmittels gegen Bremsflächen der Felge führbar sind, wobei dieser Druck in einem Zylinder eines Bremsgriffes erzeugt und durch das in Leitungen geführte Strömungsmittel übertragen wird, soll dadurch im Aufbau vereinfacht werden sowie eine höhere Betriebssicherheit bei vermiedenen Leckverlusten anbieten, daß das angelenkte Ende des Halters von einem Arm (25) eines am Gelenk (23) gelagerten Backenhebels (24) gebildet ist, dessen anderer Arm (26) zusammen mit dem ihm gegenüberstehenden entsprechenden Arm des anderen Backenhebels eine Aufnahmeeinrichtung für einen gemeinsamen Spreizzylinder (30) ergibt, der über eine Leitung (31) mit dem Bremszylinder (32) des Bremsgriffes (35) verbunden ist. Der Spreizzylinder (30) besteht aus einem beidends durch Stirnplatten (28, 29) verschlossenen Rohr (53) mit in Ausnehmungen der Stirnplatten koaxial verschieblichen Axialbolzen (42ₐ), welche im Zylinderinnenraum sowohl Dichtmanschetten (57, 57ₐ) als auch endwärts Kolbenscheiben (46) tragen, die einen volumenveränderlichen Druckraum (56) für das Strömungsmittel begrenzen.

Fig.3

Sandor Süle

Hüttenlebenweg 42, CH-8240 Thayngen

Vorrichtung zum Bremsen eines Zweirades, insbesondere
Fahrradbremse

Die Erfindung betrifft eine Vorrichtung zum Bremsen eines Zweirades, insbesondere eine Fahrradbremse, mit beidseits einer Felge angeordneten Bremsbacken, die an angelenkten Enden eines etwa U-förmigen, über der Felge festliegenden Halters vorgesehen und gegen die Kraft einer Feder oder eines entsprechenden Kraftspeichers durch den Druck eines Strömungsmittels gegen Bremsflächen der Felge führbar sind, wobei dieser Druck in einem Zylinder eines Bremsgriffes erzeugt und durch das in Leitungen geführte Strömungsmittel übertragen wird.

Eine Vorrichtung dieser Art ist in der US-PS 3 776 333 beschrieben. An einer Radgabel sitzt der U-förmige Halter und trägt an seinen Enden zwei einander koaxial gegenüberstehende Bremszylinder, welche die Bremsbacken betätigen.

Diese jeder Bremsbacke zugeordneten Zylinder enthalten einen Druckraum und einen diesen einseitig begrenzenden Kolben mit einer Kolbenstange, an welcher die Bremsbacke sitzt. Der mit beiden beschriebenen Zylindern verbundene Bremszylinder des Bremsgriffes ist in etwa gleicher Weise aufgebaut, wobei seine Kolbenstange am Bremsgriff angelenkt ist. Wird ein Betätigungshebel des Bremsgriffes verschwenkt, vermindert sich das Volumen des Bremszylinders und eine Hydraulikflüssigkeit als Strömungsmittel wird zu den beiden anderen Zylindern verdrängt, in denen sie dann die Kolben -- und mit ihnen die Kolbenstangen -- betätigen.

Es handelt sich um ein verhältnismäßig kompliziertes Bremssystem, so daß sich der Erfinder das Ziel gesetzt hat, den Aufbau einer derartigen Vorrichtung zu vereinfachen und die Betriebssicherheit zu erhöhen, auch sollen Leckverluste des hydraulischen Strömungsmittels unterbunden werden.

Zur Lösung dieser Aufgabe führt, daß das angelenkte Ende des Halters von einem Arm eines am Gelenk gelagerten Backenhebels gebildet ist, dessen anderer Arm zusammen mit dem ihm gegenüberstehenden entsprechenden Arm des anderen Backenhebels eine Aufnahmeeinrichtung für einen gemeinsamen Spreizzylinder ergibt, der über eine Leitung mit dem Bremszylinder des Bremsgriffes verbunden ist.

Dank dieser Maßgabe bedarf es nunmehr nur noch eines einzigen Zylinders im Bereich der Bremsbacken, um deren Funktionsfähigkeit zu gewährleisten; auch ist dieser mittige Zylinder symmetrisch, so daß unterschiedliche Beaufschlagungen der beiden Bremsbacken nicht mehr möglich sind.

Nach einem weiteren Merkmal der Erfindung besteht der Spreizzylinder aus einem beidends durch Stirnplatten verschlossenen Rohr mit in Ausnehmungen der Stirnplatten koaxial verschieblichen Axialbolzen, welche im Zylinderinnenraum sowohl Dichtmanschetten als auch endwärts Kolbenscheiben tragen, die einen volumenveränderlichen Druckraum für das Strömungsmittel begrenzen. Zudem sollen die freien Enden der Axialbolzen mit Kupplungsorganen für Gegenkupplungsorgane der Backenhebel versehen sein.

Als Kupplungsorgane dienen erfindungsgemäß axiale Stifte, von denen jeweils einer vom freien Ende eines Axialbolzens abragt und von einer Bohrung in einer Druckplatte oder einem entsprechenden Element aufgenommen wird, welche/s das zylinderseitige Ende eines Backenhebels bildet. Hierdurch ist es möglich, den Spreizzylinder problemlos zwischen die durch Federkraft gegeneinander gehaltenen oberen Enden der Bremshebel einzusetzen; besonders bestechend ist die Möglichkeit eines einfachen Austausches des Zylinders.

Darüber hinaus kann eine Justierung der Druckkraft noch dadurch erreicht werden, daß wenigstens eine Druckplatte eine zum axialen Stift koaxiale Stellschraube trägt, deren freies Ende den Stift aufnimmt.

Bei einer besonderen Ausführungsform des Zylinders ist dessen Rohr mittig geteilt und durch ein seinerseits rohrartiges Mittelstück verbunden, welches einen Schlauchanschluß enthält. Diese Ausführungsform erleichtert die Fertigung, da es eines unmittelbaren Durchdringens des Rohres durch den Schlauchanschluß nunmehr nicht mehr bedarf.

Im Rahmen der Erfindung liegt es auch, daß der Bremszylinder des Bremsgriffes aus einem Rohr mit einer Endscheibe und darin gelagerten Axialbolzen mit Dichtmanschette und Kolbenscheibe besteht, wobei letztere mit einer Rohrstirnwand einen Druckraum bildet. Dem Axialbolzen steht in der gegenüberliegenden Rohrstirnwand ein Schlauchanschluß gegenüber, was die Strömungsverhältnisse im Bremszylinder begünstigt.

Der Anschluß des Bremszylinders an den Handhebel des Bremsgriffes erfolgt dadurch, daß an das freie Ende des Axialbolzens eine Stange od. dgl. mit wenigstens einer Einformung -- bevorzugt eine Zahnstange -- anschließt und letztere einen Mitnehmer des am Bremsgriff angelenkten Handhebels aufnimmt. Verwendet man hier nicht nur eine Einformung, wird eine Verstellung des Kupplungsanschlusses möglich. Dabei hat es sich als zusätzlich günstig erwiesen, den Mitnehmer als Rastzahn eines Hebelendes auszubilden, welches zudem eine Drucknase besitzt, das an die Stirnfläche jener Zahnstange angesetzt ist.

Auch die Ausbildung der Dichtmanschetten nach den Angaben der Unteransprüche trägt zur Lösung der gesehenen Aufgabe bei.

Insgesamt entsteht so ein Bremssystem, das in sich geschlossen -- und dank jener den Druckräumen zugeordneter Dichtmanschetten leckagefrei -- sowie einfach zu montieren und zu handhaben ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1    eine schematische Seitenansicht eines
         Teiles eines Fahrrades mit Handbremse;

Fig. 2    ein vergrößertes Detail aus Fig. 1;

Fig. 3    ein anderes gegenüber Fig. 1 vergrößertes
         Detail in Frontansicht;

Fig. 4    einen in Fig. 2 verdeckten Zylinderteil
         in vergrößertem Längsschnitt;

Fig. 5    einen gegenüber Fig. 3 vergrößerten Längsschnitt durch einen anderen Zylinder;

Fig. 6    ein anderes Ausführungsbeispiel zu Fig. 5.

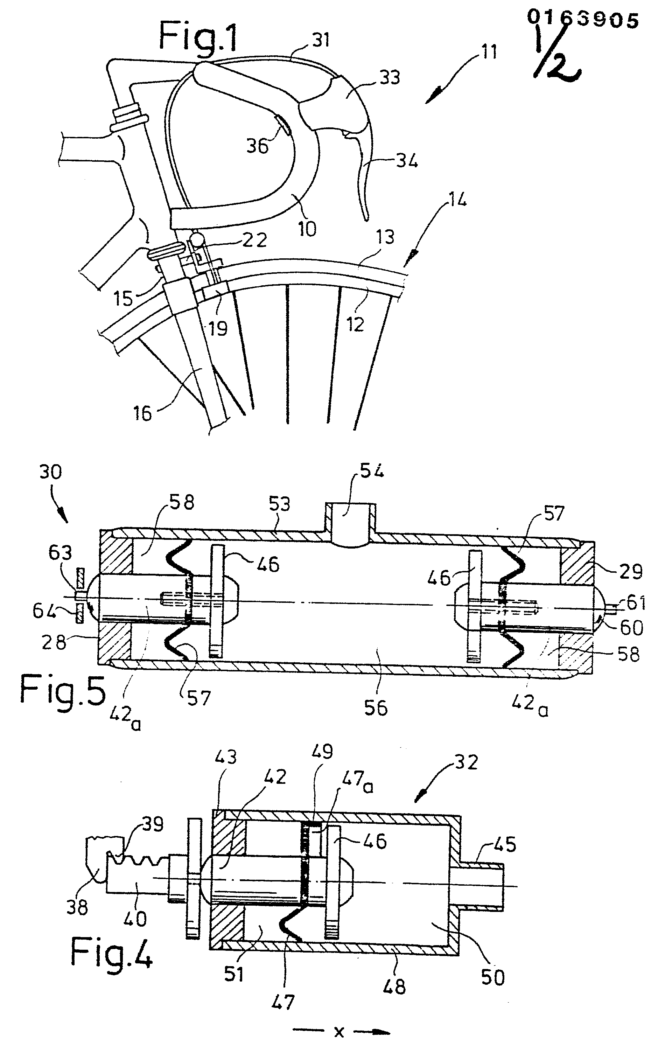

Unterhalb des Lenkers 10 eines Fahrrades 11 greifen beidseits eine Felge 12 eines -- mit Luftreifen 13 versehenem -- Vorderrades 14 Backen 19 einer Bremseinrichtung 20; diese weist einen teilkreisförmigen Haltebügel 21 mit mittiger Befestigungsschraube 22 auf; letztere ist gemäß Fig. 1 mit dem Stiel 15 einer Radgabel 16 des Vorderrades 14 -- über diesem -- verbunden.

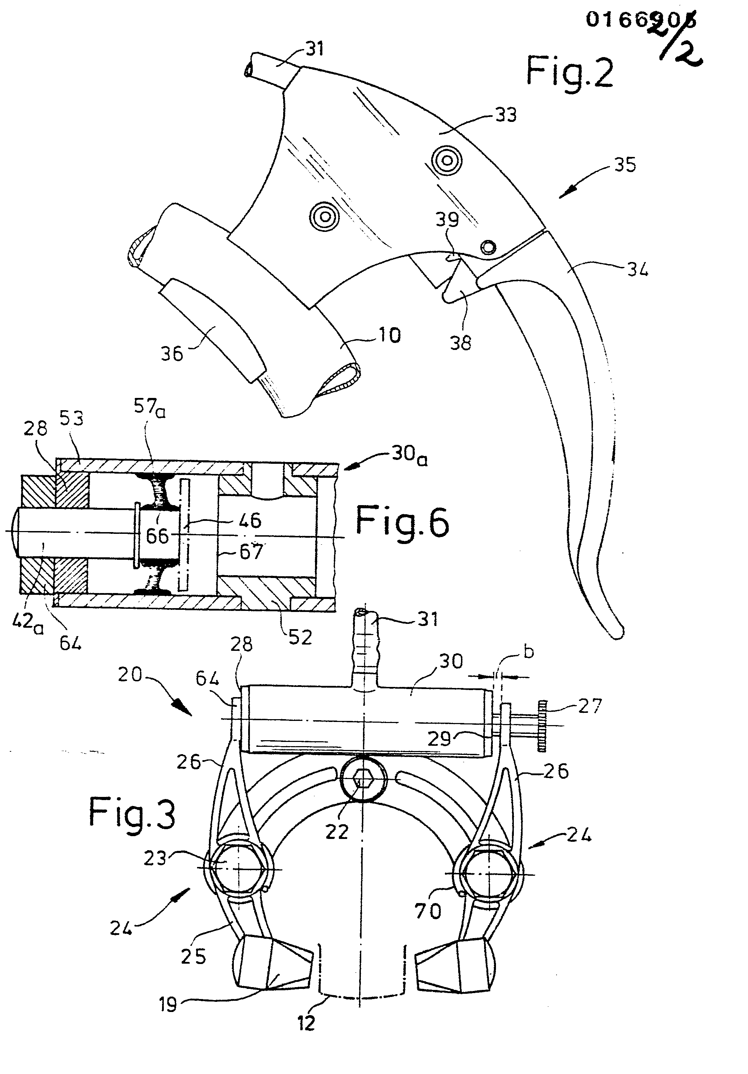

Am Haltebügel 21 ist bei 23 jeweils ein Backenhebel 24 angelenkt, dessen eines freie Ende 25 jene Backe 19 trägt und dessen anderes freies Ende 26 einer Stirnfläche 28 eines Zylinders 30 zugeordnet ist. Der andere Backenhebel 24 in Fig. 3 ist an seinem freien Ende 26 mit einer Stellschraube 27 versehen, dank deren der Abstand zu einer Stirnplatte 29 des Zylinders 30 verstellbar ist.

Den Zylinder 30 verbindet ein Hydraulikschlauch 31 mit einem Hydraulikzylinder 32 in einem Bremsgehäuse 33. Dieses wird von einem Handhebel 34 zu einem Bremsgriff 35 ergänzt, der mittels eines Kupplungsstückes 36 am Lenker 10 festgelegt ist.

An den bei 37 am Bremsgehäuse 33 angelenkten Handhebel 34 sind eine Drucknase 38 sowie ein dazu paralleler Rastzahn 39 angeformt; letzterer greift in eine Zahnstange 40 ein, die in einem Druckteller 41 endet; dieser liegt einem Axialbolzen 42 des Hydraulikzylinders 32 an. Der Axialbolzen 42 ist in einer eingesetzten Endscheibe 43 des Hydraulikzylinders 32 gelagert, welchletzterer andernends in einem angeformten Boden 44 mit einem axialen Schlauchanschluß für den Hydraulikschlauch 31 ausgerüstet ist.

Jener Axialbolzen 42 lagert andernends in einer Kolbenscheibe 46, der eine jenen Axialbolzen 42 umfassende Dichtung 47 benachbart ist.

Diese Dichtung 47 läßt in Fig. 4 zwischen Axialbolzen 42 und Zylinderwandung 48 eine Dichtlippe mit Rinnenprofil erkennen; bei einem anderen -- in Fig. 4, oben, gezeigten -- Ausführungsbeispiel ist die Dichtung $47_a$ als Scheibe mit Rand 49 geformt.

Dank der Dichtung 47, $47_a$ entsteht im Hydraulikzylinder 32 ein mit Bremsflüssigkeit gefüllter Druckraum 50 sowie -- in Druckrichtung x -- ein hinterer Luftraum 51, den eine in der Zeichnung nicht wiedergegebene Bohrung mit der Atmosphäre verbindet.

Der Zylinder 30 der Bremseinrichtung 20 besteht gemäß Fig. 5 aus den beiden Stirnplatten 28, 29 sowie einer diese verbindenden Zylinderwandung 53 mit in deren geometrischer Mitte liegendem Schlauchanschluß 54. Von den Stirnplatten 28, 29 ragen beidseits Axialbolzen $42_a$ zueinander, die mit ihren endwärtigen Kolbenscheiben 46 den Druckraum 56 des Zylinders 30 begrenzen; hinter den Kolbenscheiben 46 liegen Dichtungen 57 und hinter diesen Lufträume 58.

Nach außen hin enden die Axialbolzen $42_a$ in einer Kalottenfläche 60, von welcher Axialstifte 61 abragen. Diese durchgreifen entweder eine Bohrung 63 in einer Druckplatte 64 des freien Endes 26 von Backenhebel 24 oder greifen in eine in der Zeichnung nicht deutlich erkennbare Endeinformung der Stellschraube 27 ein. Es wird deutlich, daß der Zylinder 30 in beschriebener Weise zwischen jener Druckplatte 64 einerseits und der Stellschraube 27 -- in dort veränderlichem Abstand b -- aufgehängt ist.

Beim Zylinder $30_a$ der Fig. 6 besteht die Zylinderwand 53 aus zwei Abschnitten, welche an einem Mittelstück 52 festliegen. Dort ist die Dichtung $57_a$ am
Axialbolzen $42_a$ von I-förmigem Querschnitt und liegt
mit einem inneren Haltering 66 an der Innenseite der
Kolbenscheibe 46 an - deren Hub wird durch eine Kante
67 jenes Mittelstückes 52 begrenzt.

Die Gelenke 23 der Bremseinrichtung 20 sind im übrigen
mit Schraubenfedern 70 ausgestattet welche die freien
Enden 26 der Backenhebel 24 gegen jene Axialstifte 61
drücken.

Insgesamt entsteht so eine wirkungsvolle Handbremse
für das Fahrrad 11, welche einfach aufgebaut und deshalb wartungsfrei ist.

PATENTANSPRÜCHE
=================================

1. Vorrichtung zum Bremsen eines Zweirades, insbesondere Fahrradbremse, mit beidseits einer Felge angeordneten Bremsbacken, die an angelenkten Enden eines etwa U-förmigen, über der Felge festliegenden Halters vorgesehen und gegen die Kraft einer Feder oder eines entsprechenden Kraftspeichers durch den Druck eines Strömungsmittels gegen Bremsflächen der Felge führbar sind, wobei dieser Druck in einem Zylinder eines Bremsgriffes erzeugt und durch das in Leitungen geführte Strömungsmittel übertragen wird,

dadurch gekennzeichnet,

daß das angelenkte Ende des Halters von einem Arm (25) eines am Gelenk (23) gelagerten Backennebels (24) gebildet ist, dessen anderer Arm (26) zusammen mit dem ihm gegenüberstehenden entsprechenden Arm des anderen Backennebels eine Aufnahmeeinrichtung für einen gemeinsamen Spreizzylinder (30) ergibt, der über eine Leitung (31) mit dem Bremszylinder (32) des Bremsgriffes (35) verbunden ist.

2. Vorrichtung nach Anspruch 1, dadurch gekennzeichnet, daß der Spreizzylinder (30) aus einem beidends durch Stirnplatten (28, 29) verschlossenen Rohr (53) mit in Ausnehmungen der Stirnplatten koaxial verschieblichen Axialbolzen ($42_a$) besteht, welche im Zylinderinnenraum sowohl Dichtmanschetten (57, $57_a$) als auch endwärts Kolbenscheiben (46) tragen, die einen volumenveränderlichen Druckraum (56) für das Strömungsmittel begrenzen.

3. Vorrichtung nach Anspruch 1 oder 2, dadurch gekennzeichnet, daß die freien Enden (60) der Axialbolzen (42$_a$) mit Kupplungsorganen (61) für Gegenkupplungsorgane (63) der Backenhebel (24) versehen sind.

4. Vorrichtung nach Anspruch 3, gekennzeichnet durch axiale Stifte (61) der Axialbolzen (42$_a$) und jene aufnehmende Bohrungen (63) von Druckplatten (64) od. dgl., welche die zylinderseitigen Enden der Backenhebel (24) bilden.

5. Vorrichtung nach einem der Ansprüche 1 bis 4, gekennzeichnet dadurch, daß wenigstens eine Druckplatte (64) eine zum axialen Stift (61) koaxiale Stellschraube (27) trägt, deren freies Ende den Stift aufnimmt.

6. Vorrichtung nach wenigstens einem der Ansprüche 1 bis 5, dadurch gekennzeichnet, daß das Rohr (53) mittig geteilt und durch ein seinerseits rohrartiges Mittelstück (52) verbunden ist, welches gegebenenfalls einen Schlauchanschluß (54) enthält.

7. Vorrichtung nach wenigstens einem der Ansprüche 1 bis 6, dadurch gekennzeichnet, daß der Bremszylinder (32) des Bremsgriffes (35) aus einem Rohr (48) mit einer Endscheibe (43) und darin gelagerten Axialbolzen (42) mit Dichtmanschette (47, 47$_a$) und Kolbenscheibe (46) besteht, wobei letztere mit einer Rohrstirnwand einen Druckraum (50) bildet.

8. Vorrichtung nach Anspruch 7, dadurch gekennzeichnet, daß dem Axialbolzen (42) ein in der Rohrstirnwand vorgesehener Schlauchanschluß (45) gegenüberliegt.

9. Vorrichtung nach wenigstens einem der Ansprüche 1 bis 8, dadurch gekennzeichnet, daß an das freie Ende des Axialbolzens (42) eine Stange (40) od. dgl. mit wenigstens einer Einformung anschließt und letztere einen Mitnehmer (39) eines am Bremsgriff (35) angelenkten Handhebels (34) aufnimmt.

10. Vorrichtung nach wenigstens einem der Ansprüche 1 bis 9, dadurch gekennzeichnet, daß die Dichtmanschette (47, 57) einen rinnenförmigen Ring aufweist (Fig. 5).

11. Vorrichtung nach wenigstens einem der Ansprüche 1 bis 9, dadurch gekennzeichnet, daß die Dichtmanschette (47, $47_a$) mit einem an der Rohrinnenseite anliegenden Kragen (49) versehen ist (Fig. 4).

12. Vorrichtung nach wenigstens einem der Ansprüche 1 bis 9, dadurch gekennzeichnet, daß die Dichtmanschette (57, $57_a$) ein Ring aus einem Strang I-artigen Querschnittes ist (Fig. 6).

Fig.1

Fig.5

Fig.4

0163905
1/2

0166905

2/2

Fig.2

Fig.6

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (int. Cl. 4.) |
|---|---|---|---|
| X,Y | CH-A- 201 490 (CARNIELO)<br>* Seite 2, linke Spalte, Zeilen 11-33; Figur 3 * | 1,2 | B 62 L 1/16<br>B 62 L 3/00<br>B 60 T 11/16 |
| Y | --- | 6 | |
| X | US-A-3 554 334 (SHIMANO)<br>* Insgesamt; Figuren * | 1,3,4 | |
| Y | --- | 7-12 | |
| X | FR-A- 971 062 (BOURNAC)<br>* Insgesamt; Figuren 1-3 *<br>--- | 1-5 | |
| X | FR-A-2 024 653 (SHIMANO INDUSTRIAL CO., LTD.)<br>* Insgesamt; Figuren 1,3,5 * | 1-5 | **RECHERCHIERTE SACHGEBIETE (Int. Cl. 4)** |
| Y | --- | 7-12 | B 62 L 1/00<br>B 62 L 3/00 |
| Y | GB-A- 800 196 (GERALD NUTLAND BURGESS)<br>* Seite 2, Zeilen 22-37; Seite 3, Zeilen 96-124; Figuren 1,4 *<br>--- | 6-9 | B 60 T 11/00 |
| Y | DE-A-1 815 426 (HYDE)<br>* Seite 19, Zeile 10 - Seite 22, Zeile 5; Figur 6 *<br>--- | 7-9 | |
| Y | FR-A-1 361 175 (MINNESOTA RUBBER COMPANY)<br>* Insgesamt; Figuren 1-5 *<br>--- -/- | 10-12 | |

Der vorliegende Recherchenbericht wurde für alle Patentansprüche erstellt.

| Recherchenort | Abschlußdatum der Recherche | Prüfer |
|---|---|---|
| DEN HAAG | 15-08-1985 | BRAEMS C.G.I. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | GB-A- 700 591 (DUBOIS) --- | | |
| A | FR-E- 10 457 (PERREAU) --- | | |
| A | DE-A-1 605 752 (EVESON) --- | | |
| A | GB-A-2 077 882 (AISIN SEIKE K.K.) --- | | |
| A,P | DE-A-3 303 586 (GUSTAV MAGENWIRTH GmbH) --- | | |
| A,P | DE-A-3 325 970 (GUSTAV MAGENWIRTH GmbH) --- | | RECHERCHIERTE SACHGEBIETE (Int. Cl.4) |
| | ----- | | |

Der vorliegende Recherchenbericht wurde für alle Patentansprüche erstellt

| Recherchenort DEN HAAG | Abschlußdatum der Recherche 15-08-1985 | Prüfer BRAEMS C.G.I. |
|---|---|---|